# EUROPÄISCHE PATENTSCHRIFT

(11) **EP 1 711 990 B1**
(45) Veröffentlichungstag und Bekanntmachung des Hinweises auf die Patenterteilung: **15.09.2010**
(21) Anmeldenummer: 05707747.1
(22) Anmeldetag: 07.01.2005
(51) Int. Cl.: H02J 7/00

(54) **VORRICHTUNG UND VERFAHREN ZUM LADUNGSAUSGLEICH DER IN REIHE GESCHALTETEN KONDENSATOREN EINES DOPPELSCHICHTKONDENSATORS**
DEVICE AND METHOD FOR EQUALISING THE CHARGE OF SERIALLY CONNECTED CAPACITORS BELONGING TO A DOUBLE LAYER CAPACITOR
DISPOSITIF ET PROCEDE POUR COMPENSER LA CHARGE DES CONDENSATEURS MONTES EN SERIE D'UN CONDENSATEUR DOUBLE COUCHE

(30) Priorität: 02.02.2004 DE 102004005136
(43) Veröffentlichungstag der Anmeldung: 18.10.2006
(73) Patentinhaber: Continental Automotive GmbH, 30165 Hannover (DE)
(72) Erfinder: BOLZ, Stephan, 93102 Pfatter (DE); GÖTZENBERGER, Martin, 85051 Ingolstadt (DE); KNORR, Rainer, 93055 Regensburg (DE); LUGERT, Günter, 93055 Regensburg (DE)
(86) Internationale Anmeldenummer: PCT/EP2005/050050
(87) Internationale Veröffentlichungsnummer: WO 2005/074092

(56) Entgegenhaltungen:
- EP-A- 0 432 639
- US-A- 5 754 028

## Beschreibung

Die Erfindung betrifft eine Vorrichtung zum Ladungsausgleich der in Reihe geschalteten Einzelkondensatoren eines Doppelschichtkondensators, insbesondere in einem Kraftfahrzeug-Bordnetz, nach Anspruch 1 oder 2.

Die Erfindung betrifft auch ein Verfahren zum Betreiben der Vorrichtung nach Anspruch 1 und der Vorricchtung nach Anspruch 2

Doppelschichtkondensatoren haben sich als sinnvollste technische Lösung zur Speicherung und Bereitstellung kurzfristig hoher Leistungen in einem Kraftfahrzeug-Bordnetz herausgestellt, beispielsweise bei der Beschleunigungsunterstützung (Boosten) der Brennkraftmaschine durch einen als Elektromotor arbeitenden integrierten Starter-Generator oder bei der Wandlung von Bewegungsenergie beim regenerativen Bremsvorgang (Rekuperation) in elektrische Energie durch den als Generator arbeitenden integrierten Starter-Generator.

Die maximale Spannung eines Einzelkondensators eines Doppelschichtkondnsators ist auf etwa 2.5V bis 3.0V begrenzt, so dass für eine Spannung von beispielsweise 60V - ein typischer Spannungswert für einen in einem 42V-Bordnetz verwendeten Doppelschichtkondensator - etwa 20 bis 25 Einzelkondensatoren zu einem Kondensatorstapel in Reihe geschaltet werden müssen.

Bedingt durch unterschiedliche Selbstentladung der Einzelkondensatoren (etwa um 5% bis 8% innerhalb von 16 Stunden) baut sich im Lauf der Zeit ein Ladungsungleichgewicht im Kondensatorstapel auf, welches den Doppelschichtkondensator letztendlich unbrauchbar macht, wenn kein Ladungsausgleich vorgenommen wird. Extrapoliert man die Entladekurve auf Zeiträume von Wochen bis Monate, die beim Kraftfahrzeug relevant sind, so wird das bestehende Problem offensichtlich.

Ein einfacher Ladugsausgleich, beispielsweise durch geringes Überladen des Stapels wie bei einem Blei-Säure-Akkumulator, ist bei einem Doppelschichtkondensator jedoch nicht möglich.

Aus EP 0 432 639 B2 ist bekannt, bei einer Vielzahl von in Reihe geschalteten Akkumulatoren einen Ladungsausgleich zwischen einem schwach geladenen Akkumulator und der Gruppe der übrigen Akkumulatoren herbeizuführen, indem für jeden Einzelakkumulator des Akkumulatorstapels eine Vergleichsschaltung und eine Ladeschaltung, welche einen Rechteck-Funktionsgenerator aufweist, sowie eine Diode, ein Transformator und ein Unterbrecher vorgesehen sind. Mittels dieser als Flyback-Converter (nach dem Sperrwandlerprinzip) arbeitenden Vorrichtung wird dem gesamten Stapel Energie entnommen und diese anschließend in den am meisten entladenen Akkumulator zurückgespeist.

Dieser Aufwand mag für zwei oder drei Akkumulatoren gerechtfertigt sein, für einen Stapel aus zwanzig oder mehr Akkumulatoren/Kondensatoren ist er entschieden zu hoch.

Es ist Aufgabe der Erfindung, eine Vorrichtung mit einem vereinfachten Aufbau zu schaffen, mittels welcher ein selbstgesteuerter Betrieb zum Ladungsausgleich zwischen den Einzelkondensatoren des Kondensatorstapels eines Doppelschichtkondensators mit geringem technischem Aufwand erreicht werden kann. Aufgabe der Erfindung ist es auch, ein Verfahren zum Betrieb dieser Vorrichtung anzugeben, mit dessen Hilfe eine Funktionsüberwachung der Vorrichtung und des Kondensatorstapels vorgenommen werden kann.

Diese Aufgabe wird erfindungsgemäß durch eine Vorrichtung gemäß den Merkmalen von Anspruch 1 oder 2 und ein Verfahren gemäß den Merkmalen von Anspruch 7 gelöst.

Vorteilhafte Weiterbildungen der Erfindung sind den Unteransprüchen zu entnehmen.

Ausführungsbeispiele nach der Erfindung werden nachstehend anhand einer schematischen Zeichnung näher erläutert. In der Zeichnung zeigen:
- Figur 1: die Schaltung eines ersten Ausführungsbeispiels nach der Erfindung,
- Figur 2: Spannungsverläufe ausgewählter Punkte dieser Schal- tung,
- Figur 3: Stromverläufe ausgewählter Punkte dieser Schaltung,
- Figur 4: die Schaltung eines zweiten Ausführungsbeispiels nach der Erfindung.

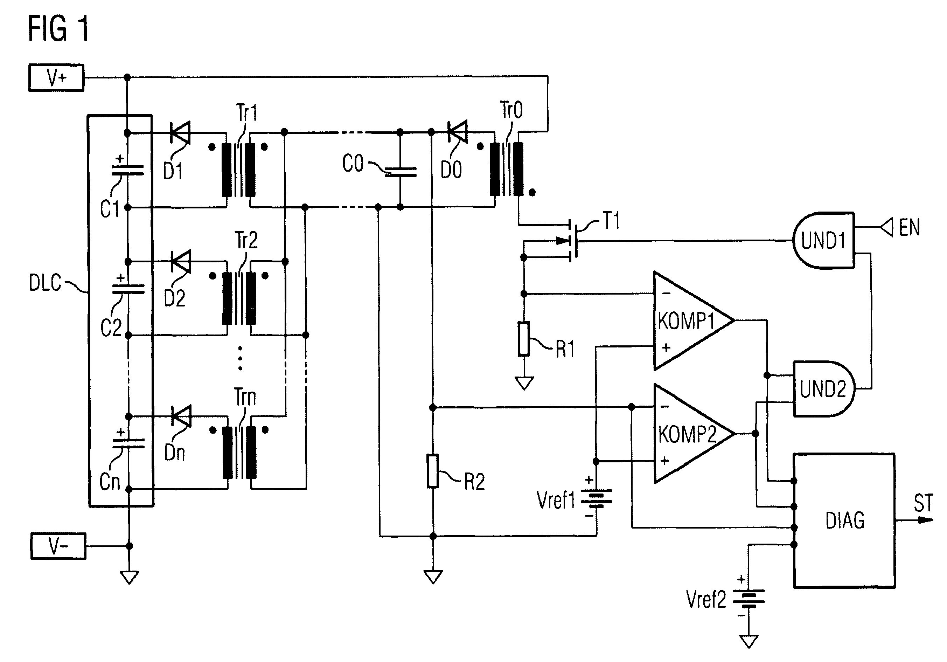

Figur 1 zeigt die Schaltung eines ersten Ausführungsbeispiels nach der Erfindung mit einem einen positiven und einen negativen Anschluss V+ und V- aufweisenden Doppelschichtkondensator DLC, bestehend aus n in Reihe geschalteten Einzelkondensatoren C1 bis Cn.

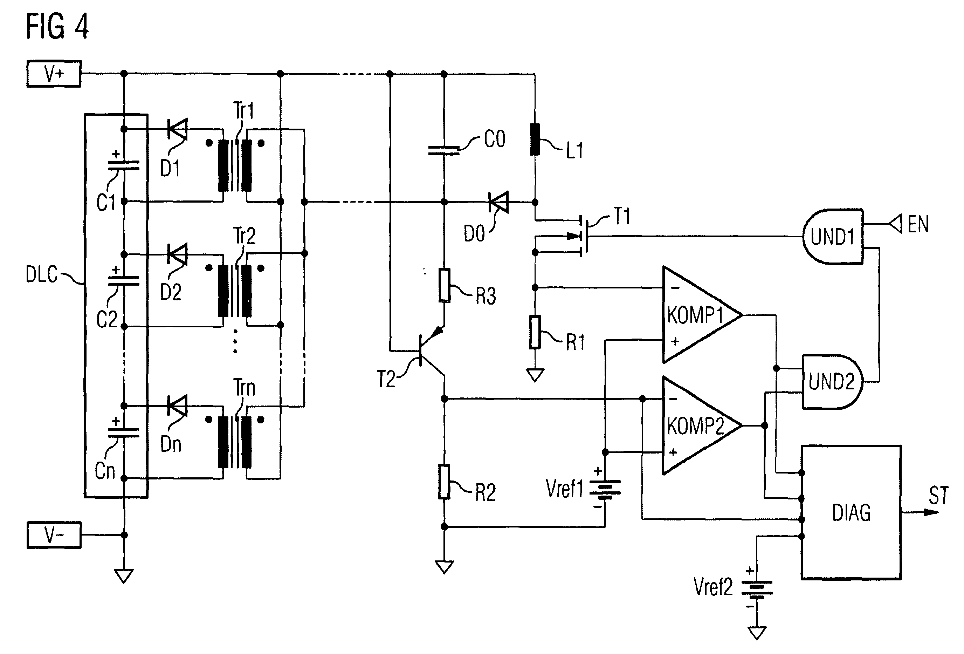

Die Schaltung weist einen Flyback-Transformator Tr0 auf, dessen Primär- und Sekundärwicklung gegenphasig zueinander gewickelt sind und welcher die Funktion eines magnetischen Energiespeichers hat. Die bei den Transformatoren eingezeichneten Punkte in den Figuren 1 und 4 bezeichnen den jeweiligen Wicklungsanfang.

Die Primärwicklung des Flyback-Transformators Tr0 ist einerseits mit dem positiven Anschluss V+ und andererseits mit dem Drainanschluss eines beispielsweise als MOSFET ausgebildeten Schalttransistors T1 verbunden. Der Schalttransistor T1 kann jedoch auch als bipolarer Transistor mit Basis-, Emitter- und Kollektoranschluss ausgebildet sein. Der Sourceanschluss des Schalttransistors T1 ist einerseits mit dem invertierenden Eingang eines ersten Spannungskomparators KOMP1 und andererseits über einen ersten Widerstand R1 mit dem negativen Anschluss V-, der am Bezugspotential (Masse) der Schaltung liegt, verbunden.

Der Gateanschluss des Schalttransistors T1 ist mit dem Ausgang eines ersten Undgliedes UND1 verbunden, dessen einem Eingang ein Steuersignal EN zugeführt wird, welches von einer externen, nicht dargestellten Steuerungslogik geliefert wird, und dessen anderer Eingang mit dem Ausgang eines zweiten Undgliedes UND2 verbunden ist.

Der nichtinvertierende Eingang des ersten Spannungskomparators KOMP1 ist mit einer massebezogenen Referenzspannung Vref1 verbunden und sein Ausgang ist mit einem Eingang des zweiten Undgliedes UND2 und mit einem ersten Eingang einer Überwachungseinheit DIAG (Diagnose) verbunden.

Ein Anschluss der Sekundärwicklung des Flyback-Transformators Tr0 ist direkt, der andere Anschluss über eine erste Diode D0 und einen zweiten Widerstand R2 mit dem negativen Anschluss V- verbunden. Ein erster Kondensator C0 ist einerseits mit der Katode der ersten Diode D0 und andererseits mit dem negativen Anschluss V- verbunden. Der Verbindungspunkt von Katode der ersten Diode D0 und zweitem Widerstand R2 ist mit dem invertierenden Eingang eines zweiten Spannungsverglei-chers KOMP2 verbunden, während dessen nichtinvertierender Eingang an der Referenzspannung Vref1 liegt.

Der Ausgang des zweiten Spannungskomparators KOMP2 ist einerseits mit dem anderen Eingang des zweiten Undgliedes UND2 und andererseits mit einem zweiten Eingang der Überwachungseinheit DIAG verbunden.

Ein dritter Eingang der Überwachungseinheit DIAG ist mit dem invertierenden Eingang des zweiten Spannungskomparators KOMP2 verbunden und ein vierter Eingang der Überwa-chungseinheit DIAG liegt an einer zweiten massebezogenen Referenzspannung Vref2. Der Ausgang der Überwachungseinheit DIAG liefert ein Statussignal ST, welches von einer externen, nicht dargestellten Auswertelogik überwacht wird, worauf später näher eingegangen wird.

Jedem Einzelkondensator C1 bis Cn des Doppelschichtkondensators DLC ist ein gleichphasig gewickelter (Primär- und Sekundärwicklung sind gleichphasig zueinander gewickelt) Einzeltransformator Tr1 bis Trn zugeordnet.

Der Wicklungsanfang der Sekundärwicklung jedes Einzeltransformators Tr1 bis Trn ist über eine Einzeldiode D1 bis Dn mit dem positiven Anschluss +C1 bis +Cn des ihm zugeordneten Einzelkondensators C1 bis Cn verbunden, während der andere Anschluss direkt mit dem anderen (negativen) Anschluss des ihm zugeordneten Einzelkondensators C1 bis Cn verbunden ist.

Die Primärwicklungen der Einzeltransformatoren Tr1 bis Trn sind parallelgeschaltet, wobei der gemeinsame Wicklungsanfang mit der Katode der ersten Diode D0 und das gemeinsame Wicklungsende mit negativen Anschluss V- (Bezugspotential) und mit dem Wicklungsende der Sekundärwicklung des Flyback-Transformators Tr0 verbunden ist. Dabei erfolgt die Verbindung des Flyback-Transformators (Tr0) mit den Einzeltransformatoren durch eine Zweidraht-Busleitung.

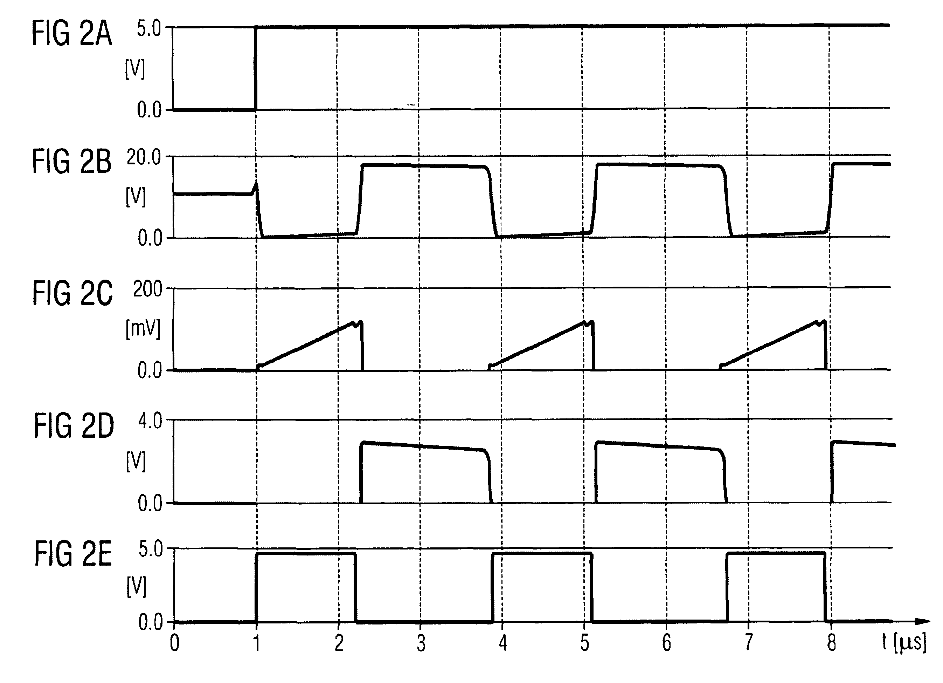

Nachstehend wird das Verfahren zum Betreiben dieser Vorrichtung anhand von in den Figuren 2a bis 2e (Spannungen) sowie 3a und 3b (Ströme) dargestellten Signalverläufen ausgewählter Punkte der Schaltung beschrieben. Angenommen ist dabei, dass die Nennspannung des Doppelschichtkondensators DLC = 10V, und die Nennspannung eines Einzelkondensators =2.5V beträgt, mit n = 4. Ein Ladungsausgleich erfolgt hier aus der Gesamtspannung des Doppelschichtkondensators DLC, kann aber auch aus anderen Energiespeichern erfolgen, sobald welche mit dem Doppelschichtkondensator DLC verbunden sind, was jedoch in Figur 1 nicht dargestellt ist.

Mittels des bereits erwähnten Steuersignals EN (Figur 2a, Beginn zum Zeitpunkt t = 1µs) wird während seiner Dauer der Schalttransistor T1 über das Undglied UND1 freigegeben (Figur 2b zeigt die Spannung am Drainanschluss des Schalttransistors T1; bis zum Zeitpunkt t = 1µs beträgt die Spannung am Drainanschluss +10V, im Zeitpunkt t = 1µs sinkt sie auf annähernd 0V). Liegen das Steuersignal EN und der Ausgang des Undgliedes UND2 auf High-Pegel, so wird Schalttransistor T1 leitend geschaltet (Figur 2e, t = 1µs).

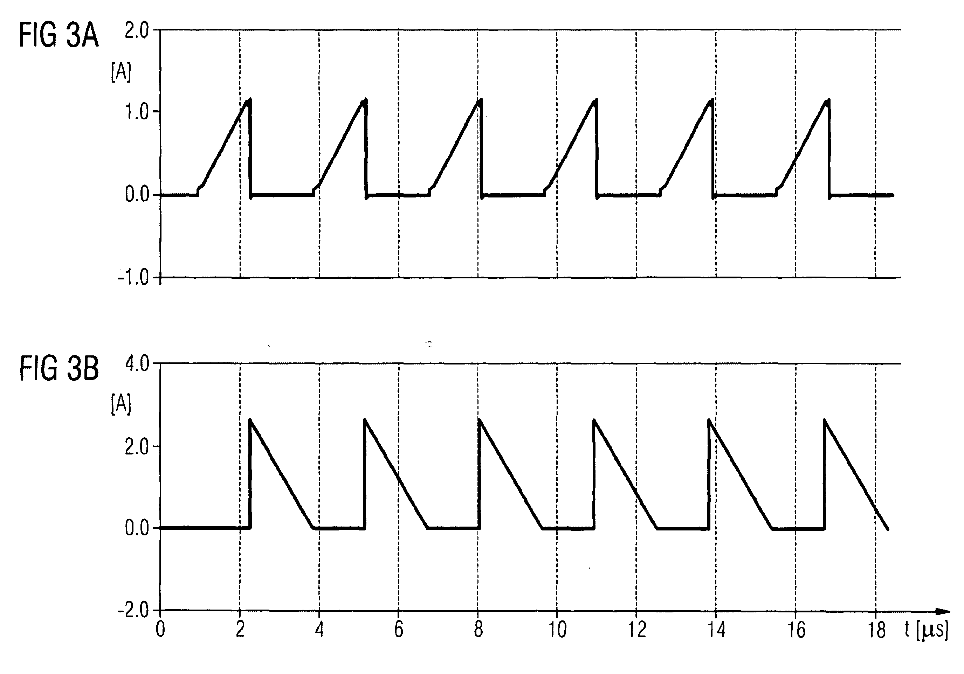

Es beginnt ein Strom vom positiven Anschluss V+ durch die Primärwicklung des Flyback-Transformators Tr0, durch den Schalttransistor T1 und den ersten Widerstand R1 zum negativen Anschluss V- zu fliessen (Figur 3a), wobei am ersten Widerstand R1 eine diesem Strom proportionale Spannung anliegt (Figur 2c).

Die am ersten Widerstand R1 anliegende Spannung steigt mit zunehmendem Stromfluss, also auch mit zunehmender Aufladung des Kerns des Flyback-Transformators Tr0. Erreicht sie den Wert der Referenzspannung Vref1 zum Zeitpunkt t ≅ 2.2ps, so schaltet der Spannungskomparator KOMP1 seinen Ausgang von High- auf Low-Pegel, worauf der Ausgang des Undgliedes UND" ebenfalls auf Low-Pegel geht und damit den Schalttransistor nichtleitend schaltet. Der Spannungskomparator KOMP1 dient also zur Erfassung des Primärstroms des Flyback-Transformators Tr0.

Da nun der durch den ersten Widerstand R1 fliessende Strom rasch sinkt, verringert sich auch die an ihm anliegende Spannung und sinkt unter den Wert der Referenzspannung Vref1. Der Ausgang von KOMP1 würde nun sofort wieder auf High-Pegel gehen, wodurch Schalttransistor T1 erneut leitend geschaltet würde.

Um dies zu verhindern, wird der beim Ausschalten des Flyback-Transformators Tr0 an dessen Sekundärseite auftretende Spannungssprung detektiert und dazu verwendet, Schalttransistor T1 nichtleitend zu halten, bis sich der Flyback-Transformator Tr0 vollständig entladen hat.

Beim Nichtleitendschalten des Schalttransistors T1 steigt die Spannung der Primärseite des Flyback-Transformators Tr0 - getrieben durch die in seinem Kern gespeicherte Energie - über die Spannung am positiven Anschluss V+ hinaus an. Ebenso steigt die Spannung an dessen Sekundärseite; der von ihr verursachte Strom fliesst über die in Durchlassrichtung betriebene erste Diode D0 (Figur 2d) und erzeugt am zweiten Widerstand R2 eine proportionale Spannung, deren Anstiegsgeschwindigkeit durch die Aufladung des ersten Kondensators C0 bestimmt wird. Diese Spannung gelangt an den invertierenden Eingang des Spannungskomparators KOMP2. Dieser dient also zur Erfassung der Sekundärspannung des Flyback-Transformators Tr0.

Solange diese Spannung grösser als die Referenzspannung Vref1 ist, schaltet der Ausgang des Spannungskomparators KOMP2 auf Low-Pegel, so dass Schalttransistor T1, über die Undglieder UND2 und UND1 nichtleitend bleibt. Erst wenn der Flyback-Transformator Tr0 vollständig entladen ist und die Spannung an seiner Sekundärseite zusammenbricht, sinkt die Spannung am invertierenden Eingang des Spannungskomparators KOMP2 unter die Referenzspannung Vref1, woraufhin dessen Ausgang auf High-Pegel geht und über die Undglieder UND2 und UND1 den Schalttransistor T1 wieder leitend steuert.

Dass die Spannung an der Sekundärwicklung des Flyback-Transformators Tr0 beim Leitendschalten des Schalttransistors T1 negativ wird, ist dabei bedeutungslos, da nun die erste Diode D0 sperrt.

Die im Flyback-Transformator Tr0 gespeicherte Energie fliesst nach dem Nichtleitendschalten des Schalttransistors T1 über die Sekundärwicklung des Flyback-Transformators Tr0 und die erste Diode D0 zum ersten Kondensator C0 und zu den parallelgeschalteten Primärwicklungen der kleinen Einzeltransformatoren Tr1 bis Trn und von dort über deren Sekundärwicklungen sowie die Einzeldioden D1 bis Dn zu den Einzelkondensatoren C1 bis Cn.

Der mit dem Nichtleitendschalten des Schalttransistors T1 verbundene rasche Stromanstieg in der Sekundärwicklung des Flyback-Transformators Tr0 lädt zunächst den ersten Kondensator C0. Dadurch erhalten die Hauptinduktivitäten der Einzeltransformatoren Tr1 bis Trn genügend Zeit zum Stromaufbau, so dass schließlich auch auf deren Sekundärseiten ein Strom fließen kann.

Auf der Sekundärseite eines Einzeltransformators, beispielsweise Tr1, entsteht somit eine Spannung, die der Summe aus Ladespannung des Einzelkondensators C1 und der Flußspannung der Einzeldiode D1 entspricht. Dies ist in gleicher Weise auch für die Sekundärspannungen der Transformatoren Tr2 bis Trn der Fall. Ein typischer Wert für diese Spannung ist beispielsweise 3.2V wobei die Ladespannung von C1 2.5V betrage und die Flußspannung von D1 0.7V. Bei Verwendung von Schottkydioden beträgt die Diodenflußspannung nur ca. 0.3V.

Die Primärspannung eines jeden Einzeltransformators ist durch die jeweilige Sekundärspannung und das - für jeden Einzeltransformator Tr1 bis Trn als identisch angesetzte Übersetzungsverhältnis gegeben.

Daraus folgt, daß sich für unterschiedliche Ladespannungen der Einzelkondensatoren C1 bis Cn auch unterschiedliche Primärspannungen der Transformatoren Tr1 bis Trn ergeben.

Da nun aber die Primärwicklungen sämtlicher Transformatoren Tr1 bis Trn parallel geschaltet sind, ergibt sich zwangsläufig eine einheitliche Primärspannung - und somit auch eine einheitliche Sekundärspannung.

Diese einheitliche Primärspannung wird dabei durch den Einzelkondensator, beispielsweise C1, mit der niedrigsten Ladespannung verursacht, da er ja auch die niedrigste Primärspannung an dem ihm zugeordneten Einzeltransformator Tr1 erzeugt.

Diese einheitliche Primärspannung liegt - mit dem reziproken Übersetzungsverhältnis der Transformatoren übersetzt - auch an den Sekundärseiten aller anderen Transformatoren Tr2 bis Trn an.

Da diese Spannung nun aber kleiner ist als die Summe aus Ladespannung des jeweiligen Einzelkondesators C2 bis Cn und der Flußspannung der zugeordneten Einzeldiode, werden diese Einzeldioden D2 bis Dn nicht leiten und die Einzelkondensatoren C2 bis Cn erhalten keinen Ladestrom. Vielmehr fließt der von der Sekundärseite des Flybacktransformators Tr0 kommende Strom im wesentlichen dem Einzelkondesator (C1) mit der kleinsten Spannnug als Ladestrom zu.

Im Verlaufe des Ladevorganges wird nun die Spannung dieses Kondensators steigen und sie erreicht den Wert des Kondensators mit der zweitniedrigsten Spannung. Von nun an wird auch die diesem Kondensator zugeordnete Einzeldiode leitend und auch dieser Kondensator erhält einen Teil des Ladestromes. Deshalb werden von nun an die Spannungen beider Kondensatoren ansteigen, bis ihre Spannung den Wert des Kondensators mit der drittniedrigsten Spannung erreicht, u.s.w..

Dieser Vorgang wiederholt sich, bis schließlich alle Kondesatoren C1 bis Cn des Stapels die gleiche Spannung haben. Damit ist dann der Ladevorgang abgeschlossen.

Mittels der Überwachungsschaltung DIAG wird die am Ausgang des Spannungskomparators KOMP1 messbare Signaldauer = Ladezeitdauer und die am Ausgang des Spannungskomparators KOMP2 messbare Signaldauer = Entladezeitdauer des Flyback-Transformators Tr0 gemessen und mit vorgegebenen oberen und unteren Grenzwerten verglichen.

Liegen die gemessenen Dauern innerhalb der vorgegebenen Grenzwerte, so kann von einem einwandfreien Zustand des Doppelschichtkondensators DLC und der Ladungsausgleichschaltung ausgegangen werden. Funktionsfehler, wie etwa Kurzschluss oder Unterbrechung einzelner Einzelkondensatoren lassen sich auf diese Weise einfach erfassen.

Eine zusätzliche Messung der gleichgerichteten Sekundärspannung des Flyback-Transformators Tr0 (Figur 2d) erlaubt darüber hinaus eine Erfassung der niedrigsten Spannung eines Einzelkondensators C1 bis Cn, indem beispielsweise, in den zeitlichen Dimensionen nach Figur 2d, etwa 0.2µs bis 1.0µs nach dem Anstieg der Spannung und des Einschwingvorgangs die Amplitude erfasst wird. Dieser Wert ist proportional zu der momentan kleinsten Spannung eines Einzelkondensators.

Ein Vergleich dieses Wertes mit vorgegebenen oberen und unteren Grenzwerten erlaubt ebenfalls eine Aussage über die Funktion des Doppelschichtkondensators DLC.

Der auf diese Weise erfasste Gesamtzustand des Doppelschichtkondensators DLC wird am Ausgang der Überwachungseinheit DIAG durch ein Statussignal ST mit entsprechendem Pegel dargestellt. Dieses Statussignal ST zeigt an, ob der Doppelschichtkondensator DLC fehlerfrei arbeitet oder ob eine Werkstatt zur Überprüfung oder Reparatur aufgesucht werden soll.

Figur 4 zeigt die Schaltung eines zweiten Ausführungsbeispiels nach der Erfindung, die im wesentlichen mit der Schaltung nach Figur 1 identisch ist, ausser dass bei ihr der Flyback-Transformator Tr0 durch eine Spule L1 ersetzt ist und zusätzlich ein Transistor T2, beispielsweise ein PNP-Transistor, und ein dritter Widerstand R3, hinzugefügt sind.

Die Schaltung weist an der Stelle, an der in Figur 1 der Flyback-Transformator Tr0 zu finden war, eine Spule L1 auf. Der eine Anschluss der Spule L1 ist mit dem positiven Anschluss V+ und der andere Anschluss einerseits mit dem Drainanschluss des Schalttransistors T1 und andererseits über eine erste Diode D0 und einen dritten Widerstand R3 mit dem Emitteranschluss eines als Pegelwandler betriebenen Transistors T2 verbunden, dessen Basisanschluss mit dem positiven Anschluss V+ und dessen Kollektoranschluss mit dem zweiten Widerstand R2 und dem invertierenden Eingang des Spannungskomparators KOMP2 verbunden ist. Der erste Kondensator C0 ist einerseits mit dem Katodenanschluß der ersten Diode D0 und andererseits mit dem positiven Anschluß V+ verbunden.

Der Anschluss der Primärwicklungen der Einzeltransformatoren Tr1 bis Trn an die Spule L1 erfolgt in der Weise, dass die miteinander verbundenen Wicklungsanfänge mit dem Verbindungspunkt von erster Diode D0 und drittem Widerstand R3 verbunden sind, und dass die miteinander verbundenen Wicklungsenden mit dem positiven Anschluss V+ verbunden sind.

Die übrige Schaltung ist, wie bereits erwähnt, mit derjenigen nach Figur 1 identisch. Auch bei diesem Ausführungsbeispiel erfolgt die Verbindung der Spule (L1) mit den Einzeltransformatoren durch eine Zweidraht-Busleitung.

Die Messung der Entladespannung der Spule L1 muss bei dieser Schaltung auf die am positiven Anschluss V+ liegende Spannung bezogen werden, was mittels des als Pegelwandler betriebenen PNP-Transistors T2 erfolgt..

Ist Schalttransistor T1 leitend gesteuert und seine Drainspannung deshalb niedrig, so sperrt die erste Diode D0 und verhindert somit einen Stromfluss von der Spule L1 durch die Basis-Emitter-Diode von Transistor T2 in Sperrichtung.

Da die auf Potential des positiven Anschlusses V+ liegende Basisspannung von Transistor T2 nun höher als seine Emitterspannung ist, sperrt Transistor T2 und die Spannung an R2 bzw. am invertierenden Eingang des Spannungskomparators KOMP2 beträgt 0 Volt.

Springt nach dem Nichtleitendwerden des Schalttransistors T1 die Spannung an der Spule L1 über das Potential am positiven Anschluss V+, so wird die erste Diode D0 leitend und es beginnt ein Strom von der Spule L1 über die erste Diode D0, den dritten Widerstand R3, Transistor T2 und den zweiten Widerstand R2 zum negativen Anschluss V- (Bezugspotential) zu fließen.

Dieser Strom erzeugt am zweiten Widerstand R2 eine positive Spannung, welche, wie bei dem Ausführungsbeispiel nach Figur 1 beschrieben, grösser als die Referenzspannung Vref1 ist, so dass der Ausgang des Spannungskomparators KOMP2 auf Low-Pegel schaltet, was letztendlich Schalttransistor T1, über die Undglieder UND2 und UND1 nichtleitend schaltet.

Erst wenn die Spule L1 vollständig entladen ist, sinkt deren Entladespannung auf nahezu Bezugspotential, woraufhin der Stromfluss durch den zweiten Widerstand R2 zusammenbricht und Schalttransistor T1, wie bei dem Ausführungsbeispiel nach Figur 1 beschrieben, wieder leitend gesteuert wird.

Die übrige Funktionsweise der Schaltung und das Verfahren zu deren Betrieb sind identisch wie bei dem Ausführungsbeispiel nach Figur 1, wie bereits weiter oben beschriebenen.

## Patentansprüche

1. Vorrichtung zum Ladungsausgleich der in Reihe geschalteten Einzelkondensatoren eines Doppelschichtkondensators (DLC), mit je einem jedem Einzelkondensator (C1 bis Cn) zugeordneten Einzeltransformator (Tr1 bis Trn), dessen Sekundärwicklung mit dem posi-Einzelktiven Anschluss des Kondensators über eine Einzeldiode (D1 bis Dn) und mit dem negativen Anschluss direkt verbunden ist, und mit einem Spannungskomparator,
**dadurch gekennzeichnet,**
**daß** ein Flyback-Transformator (Tr0) vorgesehen ist, dessen Primär- und Sekundärwicklung gegenphasig zueinander gewickelt sind, wobei das Wicklungsende dessen Primärwicklung mit dem positiven Anschluss (V+) des Doppelschichtkondensators (DLC) und der Wicklungsanfang mit dem Kollektor- oder Drainanschluss eines Schalttransistors (T1) verbunden ist, dass das Wicklungsende der Sekundärwicklung des Flyback-Transformators (Tr0) direkt mit dem negativen Anschluss (V-) des Doppelschichtkondensators (DLC) verbunden ist, während der Wicklungsanfang über die Reihenschaltung einer ersten Diode (D0) und eines zweiten Widerstandes (R2) mit dem negativen Anschluss (V-) des Doppelschichtkondensators (DLC) verbunden ist,
**dass** ein erster Spannungskomparator (KOMP1) vorgesehen ist, dessen invertierender Eingang einerseits mit dem Emitter- oder Sourceanschluss des Schalttransistors (T1) und andererseits mit einem ersten Widerstand (R1) verbunden ist, dessen anderer Anschluss mit dem negativen Anschluss (V-) des Doppelschichtkondensators (DLC) verbunden ist,
**dass** ein erstes Undglied (UND1) vorgesehen ist, dessen Ausgang mit dem Basis- oder Gateanschluss des Schalttransistors (T1) verbunden ist und dessen einem Eingang ein externes Steuersignal (EN) zugeführt wird,
**dass** ein zweites Undglied (UND2) vorgesehen ist, dessen Ausgang mit dem anderen Eingang des ersten Undgliedes (UND1) verbunden ist, und dessen einer Eingang mit dem Ausgang des ersten Spannungskomparators (KOMP1) verbunden ist,
**dass** ein zweiter Spannungskomparator (KOMP2) vorgesehen ist, dessen invertierender Eingang mit dem Verbindungspunkt zwischen der ersten Diode (D0) und dem zweiten Widerstand (R2) verbunden ist,
**dass** eine erste Referenzspannung (Vref1) vorgesehen ist, welche an die nichtinvertierenden Eingänge des ersten (KoMP1) und zweiten Spannungskomparators (KOMP2) angelegt ist,
**dass** der Ausgang des zweiten Spannungskomparators (KOMP2) mit dem anderen Eingang des zweiten Undgliedes (UND2) verbunden ist,
**dass** eine Überwachungseinheit (DIAG) vorgesehen ist, deren erster Eingang mit dem Ausgang des ersten Spannungsvergleichers (KOMP1) verbunden ist, deren zweiter Eingang mit dem Ausgang des zweiten Spannungskomparators (KOMP2) verbunden ist, deren dritter Eingang mit dem invertierenden Eingang des zweiten Spannungskomparators (KOMP2) verbunden ist, deren vierter Eingang an einer zweiten Referenzspannung (Vref2) liegt, und an deren Ausgang ein Statussignal (ST) abnehmbar ist,
**dass** die Einzeltransformatoren (Tr1 bis Trn) gleichphasig gewickelt sind, wobei der Wicklungsanfang der Sekundärwicklung jedes Einzeltransformators (Tr1 bis Trn)über eine Einzeldiode (D1 bis Dn) mit dem positiven Anschluss des ihm zugeordneten Einzelkondensators (C1 bis Cn) verbunden ist, während dessen Wicklungsende direkt mit dem negativen Anschluss des ihm zugeordneten Einzelkondensators (C1 bis Cn) verbunden ist,
**dass** die Primärwicklungen der Einzeltransformatoren (Tr1 bis Trn) parallelgeschaltet sind, wobei der gemeinsame Wicklungsanfang mit dem Verbindungspunkt zwischen der ersten Diode (D0) und dem zweiten Widerstand (R2) und das gemeinsame Wicklungsende mit dem negativen Anschluss (V-) und mit dem Wicklungsende der Sekundärwicklung des Flyback-Transformators (Tr0) verbunden ist.

2. Vorrichtung zum Ladungsausgleich der in Reihe geschalteten Einzelkondensatoren eines Doppelschichtkondensators (DLC), mit je einem jedem Einzelkondensator (C1 bis Cn) zugeordneten Einzeltransformator (Tr1 bis Trn), dessen Sekundärwicklung mit dem positiven Anschluss des Einzelkondensators über eine Einzeldiode (D1 bis Dn) und mit dem negativen Anschluss direkt verbunden ist, und mit einem Spannungskomparator,
**dadurch gekennzeichnet,**
**dass** eine Spule (L1) vorgesehen ist, deren einer Anschluss mit dem positiven Anschluss (V+) des Doppelschichtkondensators (DLC) und deren anderer Anschluss einerseits mit dem Kollektor- oder Drainanschluss eines Schalttransistors (T1) verbunden ist,
**dass** ein PNP-Transistor (T2) vorgesehen ist, dessen Basisanschluss mit dem einen Anschluss der Spule (L1) verbunden ist, dessen Emitteranschluss über einen dritten Widerstand und eine erste Diode (D0) mit dem anderen Anschluss der Spule (L1) verbunden ist, und dessen Kollektoranschluss über einen zweiten Widerstand mit dem negativen Anschluss (V-) des Doppelschichtkondensators (DLC) verbunden ist, dass ein erster Spannungskomparator (KOMP1) vorgesehen ist, dessen invertierender Eingang einerseits mit dem Emitter- oder Sourceanschluss des Schalttransistors (T1) und andererseits mit einem ersten Widerstand (R1) verbunden ist, dessen anderer Anschluss mit dem negativen Anschluss (V-) des Doppelschichtkondensators (DLC) verbunden ist,
**dass** ein erstes Undglied (UND1) vorgesehen ist, dessen Ausgang mit dem Basis- oder Gateanschluss des Schalttransistors (T1) verbunden ist und dessen einem Eingang ein externes Steuersignal (EN) zugeführt wird,
**dass** ein zweites Undglied (UND2) vorgesehen ist, dessen Ausgang mit dem anderen Eingang des ersten Undgliedes (UND1) verbunden ist, und dessen einer Eingang mit dem Ausgang des ersten Spannungskomparators (KOMP1) verbunden ist,
**dass** ein zweiter Spannungskomparator (KOMP2) vorgesehen ist,
dessen invertierender Eingang mit dem Verbindungspunkt von Kollektor des Transistors (T2) und zweitem Widerstand (R2) verbunden ist,
**dass** eine erste Referenzspannung (Vref1) vorgesehen ist, welche an die nichtinvertierenden Eingänge des ersten (KoMP1) und zweiten Spannungskomparators (KOMP2) angelegt ist, dass der Ausgang des zweiten Spannungskomparators (KOMP2) mit
dem anderen Eingang des zweiten Undgliedes (UND2) verbunden ist,
**dass** eine Überwachungseinheit (DIAG) vorgesehen ist, deren
erster Eingang mit dem Ausgang des ersten Spannungskomparators (KOMP1) verbunden ist, deren zweiter Eingang mit dem Ausgang des zweiten Spannungskomparators (KOMP2) verbunden ist, deren dritter Eingang mit dem invertierenden Eingang des zweiten Spannungskomparators (KOMP2) verbunden ist, deren vierter Eingang an einer zweiten Referenzspannung (Vref2) liegt, und an deren Ausgang ein Statussignal (ST) abnehmbar ist,
**dass** die Einzeltransformatoren (Tr1 bis Trn) gleichphasig gewickelt sind, wobei der Wicklungsanfang der Sekundärwicklung jedes Einzeltransformators (Tr1 bis Trn)über eine Einzeldiode (D1 bis Dn) mit dem positiven Anschluss des ihm zugeordneten Einzelkondensators (C1 bis Cn) verbunden ist, während dessen Wicklungsende direkt mit dem negativen Anschluss des ihm zugeordneten Einzelkondensators (C1 bis Cn) verbunden ist, und
**dass** die Primärwicklungen der Einzeltransformatoren (Tr1 bis
Trn) parallelgeschaltet sind, wobei der gemeinsame Wicklungsanfang mit dem Verbindungspunkt zwischen der ersten Diode (D0) und dem dritten Widerstand (R3) und das gemeinsame Wicklungsende mit dem positiven Anschluss (V+) des Doppelschichtkondensators (DLC) und mit dem einen Anschluss der Spule (L1) verbunden ist.

3. Vorrichtung nach Anspruch 1 oder 2, **dadurch gekennzeichnet, dass** die Einzeltransformatoren (Tr1 bis Trn) und die Einzeldioden D1 bis Dn zusammen mit den Einzelkondensatoren (C1 bis Cn) im Gehäuse des Doppelschichtkondensators (DLC) angeordnet sind.

4. Vorrichtung nach Anspruch 1 oder 2, **dadurch gekennzeichnet, dass** die Verbindung des Flyback-Transformators (Tr0) oder der Spule (L1) mit den Einzeltransformatoren durch eine Zweidraht-Busleitung erfolgt.

5. Vorrichtung nach Anspruch 1, **dadurch gekennzeichnet, dass** ein erster Kondensator (C0) vorgesehen ist, welcher einerseits mit dem Katodenanschluss der ersten Diode (D0) und andererseits mit dem negativen Anschluss (V-) verbunden ist.

6. Vorrichtung nach Anspruch 2, **dadurch gekennzeichnet, dass** ein erster Kondensator (C0) vorgesehen ist, welcher einerseits mit dem Katodenanschluß der ersten Diode (D0) und andererseits mit dem positiven Anschluß (V+) verbunden ist.

7. Verfahren zum Betreiben der Vorrichtung nach Anspruch 1 oder 2, **dadurch gekennzeichnet, dass** der Betrieb selbstgesteuert erfolgt, wobei Schalttransistor (T1)
leitend gesteuert wird, solange ein externes Steuersignal
(EN) vorliegt und solange die Spannung an der Sekundärwicklung des Flyback-Transformators (Tr0) oder an der Spule (L1) unterhalb eines vorgegebenen Wertes liegt, nichtleitend gesteuert wird, wenn der durch die Primärwicklung des Flyback-Transformators (Tr0) oder durch die Spule (L1) fließende Strom einen vorgegebenen Wert erreicht, und nichtleitend gesteuert bleibt, solange die Spannung an der
Sekundärwicklung des Flyback-Transformators (Tr0) oder an der Spule (L1) einen vorgegebenen Wert übersteigt oder das externe Steuersignal (EN) nicht vorliegt.

8. Verfahren nach Anspruch 7, **dadurch gekennzeichnet, dass** die am Ausgang des ersten Spannungskomparators (KOMP1) messbare, der Ladezeitdauer entsprechende Signaldauer und die am Ausgang des zweiten Spannungskomparators (KOMP2) messbare, der Entladezeitdauer des Flyback-Transformators (Tr0) oder der Spule (L1) entsprechende Signaldauer in der Überwachungsschaltung (DIAG) jeweils mit einem oberen und einem unteren Grenzwert verglichen wird, und
dass von einem einwandfreien Zustand des Doppelschichtkondensators (DLC) und der Ladungsausgleichschaltung ausgegangen wird, solange die gemessenen Werte innerhalb der Grenzwerte liegen, und
dass die Überwachungsschaltung (DIAG) ein diesem Zustand entsprechendes Statussignal (ST) ausgibt.

9. Verfahren nach Anspruch 7, **dadurch gekennzeichnet, dass** die bei einem Entladevorgang des Flyback-Transformators (Tr0) oder der Spule (L1) nach dem Einschwingvorgang messbare Amplitude der gleichgerichteten Entladespannung proportional zu der momentan niedrigsten Spannung eines Einzelkondensators (C1 bis Cn) des Doppelschichtkondensators (DLC) ist.

10. Verfahren nach Anspruch 8 oder 9, **dadurch gekennzeichnet, dass** die nach dem Einschwingvorgang messbare Amplitude der gleichgerichteten Entladespannung in der Überwachungsschaltung (DIAG) jeweils mit einem oberen und einem unteren Grenzwert verglichen wird,
dass von einem einwandfreien Zustand des Doppelschichtkondensators (DLC) ausgegangen wird, solange die gemessenen Werte innerhalb der Grenzwerte liegen, und
dass die Überwachungsschaltung (DIAG) ein diesem Zustand entsprechendes Statussignal (ST) ausgibt.

## Claims

1. Device for equalising a charge of serially connected single capacitors belonging to a double layer capacitor (DLC), each having one single transformer (Tr1 to Trn) assigned to each single capacitor (C1 to Cn), the secondary winding of said single transformer being directly connected to the positive terminal of the single capacitor via a single diode (D1 to Dn) and to the negative terminal, and having a voltage comparator, **characterised in that**
a flyback transformer (Tr0) is provided, the primary and secondary windings of which are wound in phase-opposition to one another, wherein the end of winding of said primary winding is connected to the positive terminal (V+) of the double layer capacitor (DLC) and the start of said winding is connected to the collector/drain terminal of a switching transistor (T2),
the end of said secondary winding of the flyback transformer (Tr0) is directly connected to the negative terminal (V-) of the double layer capacitor (DLC), while the start of said winding is connected by way of the series connection of a first diode (D0) and of a second resistor (R2) to the negative terminal (V-) of the double layer capacitor (DLC),
a first voltage comparator (KOMP1) is provided, the inverting input of which is connected to the emitter/source terminal of the switching transistor (T1) on the one hand and to a first resistor (R1) on the other hand, the other terminal of which is connected to the negative terminal (V-) of the double layer capacitor (DLC),
a first AND element (UND1) is provided, the output of which is connected to the base/gate terminal of the switching transistor (T1) and the one input of which receives an external control signal (EN),
a second AND element (UND2) is provided, the output of which is connected to the other input of the first AND element (UND1), and the one input of which is connected to the output of the first voltage comparator (KOMP1),
a second voltage comparator (KOMP2) is provided, the inverting input of which is connected to the connection point between the first diode (D0) and the second resistor (R2),
a first reference voltage (Vref1) is provided, which is applied to the non-inverting inputs of the first (KOMP1) and second voltage comparator (KOMP2),
the output of the second voltage comparator (KOMP2) is connected to the other input of the second AND element (UND2),
a monitoring unit (DIAG) is provided, the first input of which is connected to the output of the first voltage comparator (KOMP1), the second input of which is connected to the output of the second voltage comparator (KOMP2), the third input of which is connected to the inverting input of the second voltage comparator (KOMP2), the fourth input of which lies at a second reference voltage (Vref2), and at the output of which a status signal (ST) can be tapped,
the single transformers (Tr1 to Trn) are wound in phase, whereby the start of the secondary winding of each single transformer (Tr1 to Trn) is connected via a single diode (D1 to Dn) to the positive terminal of the single capacitor (C1 to Cn) assigned to it, while the end of said secondary winding is directly connected to the negative terminal of the single capacitor (C1 to Cn) assigned to it,
the primary windings of the single transformers (Tr1 to Trn) are connected in parallel, whereby the common start of the winding is connected to the connection point between the first diode (D0) and the second resistor (R2) and the common end of the winding is connected to the negative terminal (V-) and to the end of the secondary winding of the flyback transformer (Tr0).

2. Device for equalising a charge of serially connected single capacitors belonging to a double layer capacitor (DLC), each having one single transformer (Tr1 to Trn) assigned to each single capacitor (C1 to Cn), the secondary winding of said single transformer being directly connected to the positive terminal of the single capacitor via a single diode (D1 to Dn) and to the negative terminal, and having a voltage comparator, **characterised in that**
an inductor (L1) is provided, the one terminal of which is connected to the positive terminal (V+) of the double layer capacitor (DLC) and the other terminal of which is connected on one side to the collector/drain terminal of a switching transistor (T2),
a PNP transistor (T2) is provided, the base terminal of which is connected to the one terminal of the inductor (L1), the emitter terminal of which is connected via a third resistor and a first diode (D0) to the other terminal of the inductor (L1), and the collector terminal of which is connected via a second resistor to the negative terminal (V-) of the double layer capacitor (DLC),
a first voltage comparator (KOMP1) is provided, the inverting input of which is connected on the one hand to the emitter/source terminal of the switching transistor (T1) and on the other hand to a first resistor (R1), the other terminal of which is connected to the negative terminal (V-) of the double layer capacitor (DLC),
a first AND element (UND1) is provided, the output of which is connected to the base/gate terminal of the switching transistor (T1) and the one input of which receives an external control signal (EN),
a second AND element (UND2) is provided, the output of which is connected to the other input of the first AND element (UND1), and the one input of which is connected to the output of the first voltage comparator (KOMP1),
a second voltage comparator (KOMP2) is provided, the inverting input of which is connected to the connection point between the collector of the transistor (T2) and the second resistor (R2),
a first reference voltage (Vref1) is provided, which is applied to the non-inverting inputs of the first (KOMP1) and second voltage comparator (KOMP2),
the output of the second voltage comparator (KOMP2) is connected to the other input of the second AND element (UND2),
a monitoring unit (DIAG) is provided, the first input of which is connected to the output of the first voltage comparator (KOMP1), the second input of which is connected to the output of the second voltage comparator (KOMP2), the third input of which is connected to the inverting input of the second voltage comparator (KOMP2), the fourth input of which lies at a second reference voltage (Vref2), and at the output of which a status signal (ST) can be tapped,
the single transformers (Tr1 to Trn) are wound in phase, whereby the start of the secondary winding of each single transformer (Tr1 to Trn) is connected via a single diode (D1 to Dn) to the positive terminal of the single capacitor (C1 to Cn) assigned to it, while the end of said secondary winding is directly connected to the negative terminal of the single capacitor (C1 to Cn) assigned to it,
the primary windings of the single transformers (Tr1 to Trn) are connected in parallel, whereby the common start of the winding is connected to the connection point between the first diode (D0) and the third resistor (R3) and the common end of the winding is connected to the positive terminal (V+) of the double layer capacitor (DLC) and to the one terminal of the inverter (L1).

3. Device according to claim 1 or 2, **characterised in that** the single transformers (Tr1 to Trn) and the single diodes (D1 to Dn) are disposed together with the single capacitors (C1 to Cn) in the housing of the double layer capacitor (DLC).

4. Device according to claim 1 or 2, **characterised in that** the connection of the flyback transformer (Tr0) or of the inverter (L1) to the single transformers comprises a two-wire bus cable.

5. Device according to claim 1, **characterised in that** a first capacitor (C0) is provided, which is connected on the one hand to the cathode terminal of the first diode (D0) and on the other hand to the negative terminal (V-).

6. Device according to claim 2, **characterised in that** a first capacitor (C0) is provided, which is connected on the one hand to the cathode terminal of the first diode (D0) and on the other hand to the positive terminal (V+).

7. Method for operating the device according to claim 1 or 2, **characterised in that** the operation is performed in a self-controlled manner, whereby the switching transistor (T1) is controlled in a conducting state as long as an external control signal (EN)
is present and as long as the voltage at the secondary winding
of the flyback transformer (T0) or at the inverter (L1) lies below a predefined value,
is controlled in a non-conducting state if the current flowing
through the primary winding of the flyback transformer (Tr0) or through the inverter (L1) reaches a predefined value; and is controlled in a non-conducting state as long as the voltage
at the secondary winding of the flyback transformer (Tr0) or at the inverter (L1) exceeds a predefined value or the external control signal (EN) is not present.

8. Method according to claim 7, **characterised in that** the measurable signal duration, corresponding to the charging
time, at the output of the first voltage comparator (KOMP1) and the signal duration, corresponding to the discharging time of the flyback transformer (Tr0) or of the inverter (L1), at the output of the second voltage comparator (KOMP2) can be compared in each case with an upper and a lower limit value in the monitoring circuit (DIAG), and
a perfect state of the double layer capacitor (DLC) and of the device for equalising the charge are assumed, so long as the measured values lie within the limit values, and
the monitoring circuit (DIAG) outputs a status signal (ST) corresponding to this state.

9. Method according to claim 7, **characterised in that** the amplitude of the rectified discharging voltage is proportional to the current lowest voltage of a single capacitor (C1 to Cn) of the double layer capacitor (DLC), during a discharging operation of the flyback transformer (Tr0) or of the inverter (L1) after the transient reaction.

10. Method according to claim 8 or 9, **characterised in that** the amplitude, which can be measured after the transient
reaction, of the rectified discharging voltage can be compared in each case with an upper and a lower limit value in the monitoring circuit (DIAG),
a perfect state of the double layer capacitor (DLC) is assumed, so long as the measured values lie within the limit values, and
the monitoring circuit (DIAG) outputs a status signal (ST) corresponding to this state.

## Revendications

1. Dispositif pour l'équilibre de charge des condensateurs individuels montés en série d'un condensateur à double couche (DLC), comprenant chacun un transformateur individuel (Tr1 à Tm) attribué à chaque condensateur individuel (C1 à Cn), dont l'enroulement secondaire est relié directement au branchement positif du condensateur individuel au moyen d'une diode individuelle (D1 à Dn) et au branchement négatif, et un comparateur de tension,
**caractérisé en ce que**
il est prévu un transformateur Flyback (Tr0), dont l'enroulement primaire et l'enroulement secondaire sont enroulés en opposition de phase, l'extrémité d'enroulement de son enroulement primaire étant reliée au branchement positif (V+) du condensateur à double couche (DLC) et le début d'enroulement au branchement de collecteur ou au branchement de drain d'un transistor de commutation (T1),
**en ce que** l'extrémité d'enroulement de l'enroulement secondaire du transformateur Flyback (Tr0) est reliée directement au branchement négatif (V-) du condensateur à double couche (DLC), alors que le début d'enroulement est relié par le montage en série d'une première diode (D0) et d'une seconde résistance (R2) au branchement négatif (V-) du condensateur à double couche (DLC),
**en ce qu'**un premier comparateur de tension (KOMP1) est prévu, dont l'entrée inverseuse est reliée d'une part au branchement émetteur ou au branchement source du transistor de commutation (T1) et d'autre part à une première résistance (R1), dont l'autre branchement est relié au branchement négatif (V-) du condensateur à double couche (DLC),
**en ce qu'**une première porte ET (UND1) est prévue, dont la sortie est reliée au branchement de base ou au branchement de grille du transistor de commutation (T1) et à une entrée de laquelle un signal de commande externe (EN) est amené,
**en ce qu'**une deuxième porte ET (UND2) est prévue, dont la sortie est reliée à l'autre entrée de la première porte ET (UND1) et dont une entrée est reliée à la sortie du premier comparateur de tension (KOMP1),
**en ce qu'**un second comparateur de tension (KOMP2) est prévu, dont l'entrée inverseuse est reliée au point de liaison entre la première diode (D0) et la seconde résistance (R2),
**en ce qu'**une première tension de référence (Vref1) est prévue, qui est appliquée sur les entrées non inverseuses du premier comparateur de tension (KOMP1) et du second comparateur de tension (KOMP2),
**en ce que** la sortie du second comparateur de tension (KOMP2) est reliée à l'autre entrée de la seconde porte ET (UND2),
**en ce qu'**une unité de surveillance (DIAG) est prévue, dont la première entrée est reliée à la sortie du premier comparateur de tension (KOMP1), dont la deuxième entrée est reliée à la sortie du second comparateur de tension (KOMP2), la troisième entrée est reliée à l'entrée inverseuse du second comparateur de tension (KOMP2), la quatrième entrée se situe sur une seconde tension de référence (Vref2), et sur la sortie de laquelle un signal d'état (ST) peut être prélevé,
**en ce que** les transformateurs individuels (Tr1 à Tm) sont enroulés en opposition de phase, le début d'enroulement de l'enroulement secondaire de chaque transformateur individuel (Tr1 à Tm) étant relié par une diode individuelle (D1 à Dn) au branchement positif du condensateur individuel (C1 à Cn) qui lui est attribué, alors que son extrémité d'enroulement est reliée directement au branchement négatif du condensateur individuel (C1 à Cn) qui lui est attribué,
**en ce que** les enroulements primaires des transformateurs individuels (Tr1 à Tm) sont montés en parallèle, le début d'enroulement commun étant relié au point de liaison entre la première diode (D0) et la seconde résistance (R2) et l'extrémité d'enroulement commune étant reliée au branchement négatif (V-) et à l'extrémité d'enroulement de l'enroulement secondaire du transformateur Flyback (Tr0).

2. Dispositif pour l'équilibre de charge des condensateurs individuels montés en série d'un condensateur à double couche (DLC), comprenant chacun un transformateur individuel (Tr1 à Tm) attribué à chaque condensateur individuel (C1 à Cn), dont l'enroulement secondaire est relié directement au branchement positif du condensateur individuel au moyen d'une diode individuelle (D1 à Dn) et au branchement négatif, et un comparateur de tension,
**caractérisé en ce que**
une bobine (L1) est prévue, dont l'un des branchements est relié au branchement positif (V+) du condensateur à double couche (DLC) et l'autre branchement est relié d'une part au branchement de collecteur ou au branchement de drain d'un transistor de commutation (T1),
**en ce qu'**un transistor PNP (T2) est prévu, dont le branchement de base est relié à l'un des branchements de la bobine (L1), dont le branchement émetteur est relié au moyen d'une troisième résistance et d'une première diode (D0) à l'autre branchement de la bobine (L1), et dont le branchement de collecteur est relié au moyen d'une seconde résistance au branchement négatif (V-) du condensateur à double couche (DLC),
**en ce qu'**un premier comparateur de tension (KOMP1) est prévu, dont l'entrée inverseuse est reliée d'une part au branchement émetteur ou au branchement source du transistor de commutation (T1) et d'autre part à une première résistance (R1), dont l'autre branchement est relié au branchement négatif (V-) du condensateur à double couche (DLC),
**en ce qu'**une première porte ET (UND1) est prévue, dont la sortie est reliée au branchement de base ou au branchement de grille du transistor de commutation (T1) et à une entrée de laquelle un signal de commande (EN) externe est amené,
**en ce qu'**une deuxième porte ET (UND2) est prévue, dont la sortie est reliée à l'autre entrée de la première porte ET (UND1) et dont une entrée est reliée à la sortie du premier comparateur de tension (KOMP1),
**en ce qu'**un second comparateur de tension (KOMP2) est prévu, dont l'entrée inverseuse est reliée au point de liaison du collecteur du transistor (T2) et de la seconde résistance (R2),
**en ce qu'**une première tension de référence (Vref1) est prévue, qui est appliquée sur les entrées non inverseuses du premier comparateur de tension (KOMP1) et du second comparateur de tension (KOMP2),
**en ce que** la sortie du second comparateur de tension (KOMP2) est reliée à l'autre entrée de la seconde porte ET (UND2),
**en ce qu'**une unité de surveillance (DIAG) est prévue, dont la première entrée est reliée à la sortie du premier comparateur de tension (KOMP1), la seconde entrée est reliée à la sortie du second comparateur de tension (KOMP2), la troisième entrée est reliée à l'entrée inverseuse du second comparateur de tension (KOMP2), la quatrième entrée se situe sur une seconde tension de référence (Vref2), et sur la sortie de laquelle un signal d'état (ST) peut être prélevé,
**en ce que** les transformateurs individuels (Tr1 à Tm) sont enroulés en opposition de phase, le début d'enroulement de l'enroulement secondaire de chaque transformateur individuel (Tr1 à Tm) étant relié au moyen d'une diode individuelle (D1 à Dn) au branchement positif du condensateur individuel (C1 à Cn) qui lui est attribué, alors que son extrémité d'enroulement est reliée directement au branchement négatif du condensateur individuel (C1 à Cn) qui lui est attribué, et
**en ce que** les enroulements primaires des transformateurs individuels (Tr1 à Tm) sont montés en parallèle, le début d'enroulement commun étant relié au point de liaison entre la première diode (D0) et la troisième résistance (R3) et l'extrémité d'enroulement commune étant reliée au branchement positif (V+) du condensateur à double couche (DLC) et à l'un des branchements de la bobine (L1).

3. Dispositif selon la revendication 1 ou 2, **caractérisé en ce que** les transformateurs individuels (Tr1 à Tm) et les diodes individuelles (D1 à Dn) sont disposés conjointement avec les condensateurs individuels (C1 à Cn) dans le boîtier du condensateur à double couche (DLC).

4. Dispositif selon la revendication 1 ou 2, **caractérisé en ce que** la liaison du transformateur Flyback (Tr0) ou de la bobine (L1) avec les transformateurs individuels s'effectue par une ligne de bus à deux fils.

5. Dispositif selon la revendication 1, **caractérisé en ce qu'**un premier condensateur (C0) est prévu, qui est relié d'une part au branchement de cathode de la première diode (D0) et d'autre part au branchement négatif (V-).

6. Dispositif selon la revendication 2, **caractérisé en ce qu'**un premier condensateur (C0) est prévu, qui est relié d'une part au branchement de cathode de la première diode (D0) et d'autre part au branchement positif (V+).

7. Procédé pour utiliser le dispositif selon la revendication 1 ou 2, **caractérisé en ce que** le fonctionnement s'effectue de façon autocommandée, le transistor de commutation (T1) étant commandé de façon directrice aussi longtemps qu'un signal de commande externe (EN) est présent et aussi longtemps que la tension sur l'enroulement secondaire du transformateur Flyback (Tr0) ou sur la bobine (L1) se situe au-dessous d'une valeur prédéfinie, le transistor de commutation (T1) étant commandé de façon non directrice lorsque le courant circulant à travers l'enroulement primaire du transformateur Flyback (Tr0) ou à travers la bobine (L1) atteint une valeur prédéfinie, et restant commandé de façon non directrice aussi longtemps que la tension sur l'enroulement secondaire du transformateur Flyback (Tr0) ou sur la bobine (L1) dépasse une valeur prédéfinie ou que le signal de commande externe (EN) n'est pas présent.

8. Procédé selon la revendication 7, **caractérisé en ce que** la durée du signal mesurable sur la sortie du premier comparateur de tension (KOMP1) et correspondant à la durée de charge et la durée de signal mesurable sur la sortie du second comparateur de tension (KOMP2), correspondant à la durée de décharge du transformateur Flyback (Tr0) ou de la bobine (L1) sont comparées dans le circuit de surveillance (DIAG) respectivement avec une valeur limite supérieure et une valeur limite inférieure, et
**en ce que** l'on part d'un état parfait du condensateur à double couche (DLC) et du circuit d'équilibre de charge aussi longtemps que les valeurs mesurées se situent à l'intérieur des valeurs limites, et
**en ce que** le circuit de surveillance (DIAG) émet un signal d'état (ST) correspondant à cet état.

9. Procédé selon la revendication 7, **caractérisé en ce que** l'amplitude, mesurable lors d'une opération de décharge du transformateur Flyback (Tr0) ou de la bobine (L1) après le phénomène transitoire, de la tension de décharge redressée est proportionnelle à la tension la plus faible momentanément d'un condensateur individuel (C1 à Cn) du condensateur à double couche (DLC).

10. Procédé selon la revendication 8 ou 9, **caractérisé en ce que** l'amplitude, mesurable après le phénomène transitoire, de la tension de décharge redressée dans l'unité de surveillance (DIAG) est comparée respectivement avec une valeur limite supérieure et une valeur limite inférieure,
**en ce qu'**on part d'un état parfait du condensateur à double couche (DLC) aussi longtemps que les valeurs mesurées se situent à l'intérieur des valeurs limites, et
**en ce que** le circuit de surveillance (DIAG) émet un signal d'état correspondant à cet état (ST).
